# EUROPEAN PATENT APPLICATION

(11) **EP 4 089 641 A1**
(43) Date of publication of application: **16.11.2022**
(21) Application number: 21173602.0
(22) Date of filing: 12.05.2021
(51) Int. Cl.: G06T 15/04, G06T 17/00

(54) **METHOD FOR GENERATING A 3D AVATAR, METHOD FOR GENERATING A PERSPECTIVE 2D IMAGE FROM A 3D AVATAR AND COMPUTER PROGRAM PRODUCT THEREOF**

(71) Applicant: Reactive Reality AG, 8010 Graz (AT)
(72) Inventor: Valta, Thomas, 8010 Graz (AT); Braulio, Sespede, 8010 Graz (AT); Grasmug, Philipp, 8010 Graz (AT); Hauswiesner, Stefan, 8182 Puch bei Weiz (AT)
(74) Representative: Epping - Hermann - Fischer

(57) **Abstract**

A method for generating a 3D avatar using a computer system is disclosed, wherein the computer system has access to a parametric body model, PBM, template and to a base texture map associated with the PBM template, and the PBM template comprises a 3D representation of a surface of a template body. The method includes receiving a set of keyframes captured with a digital camera, each of the keyframes including a color image having a different viewing angle of at least a head area of a user, together with 3D metadata, generating a head data structure thereof comprising a 3D representation and the keyframes and being adapted for image based rendering, generating a textured PBM based on the PBM template, and generating the avatar by assembling the head data structure and the textured PBM.

## Description

### FIELD OF THE INVENTION

The present disclosure relates to a computer implemented method for generating a 3D avatar, to a method for generating a perspective 2D image from a 3D avatar and to a computer program product thereof.

### BACKGROUND

A variety of applications require 3D full body avatars of its users which accurately reflect the user's visual appearance and body shape. These applications include gaming, 3D teleconferencing / telepresence, health & fitness, size recommendations and the virtual try-on of garments.

Achieving a high level of realism of these avatars is critical. Avatars which fall short in realism are often perceived as disturbing. This effect is called the "uncanny valley". The best way of obtaining photo-realistic avatars is 3D scanning. However, users of said applications often have no access to 3D scanning hardware, such as laser sensors and 3D body scanning booths.

Today's smartphones bring 3D sensing technology to a large user base, but require sophisticated software to achieve the quality level of stationary, professional 3D body scanners. Such scanning software needs to guide the users through the process while capturing and processing a large amount of sensor data. Conventional systems for mobile 3D avatar generation rely on a procedure which is hard to follow: users need to place the smartphone at a suitable height and angle somewhere in the room, pose and spin in front of the device while following instructions from afar without seeing the screen. Further, capturing of the entire body is required in these solutions.

### SUMMARY OF THE INVENTION

An object to be achieved is to provide an improved modelling concept that allows an efficient creation of a 3D avatar.

This object is achieved with the subject-matter of the independent claims. Embodiments and developments derive from the dependent claims.

The improved modelling concept is based on the idea of capturing a set of keyframes with a digital camera that optionally includes a depth sensor, such that each of the keyframes includes a color image having a different viewing angle of the head area of the user, together some 3D metadata and, optionally, together with an associated depth map. The depth maps may be captured with a depth sensor of the camera or generated through a machine learning algorithm, for example. Capturing of remaining body parts, e.g. torso, arms and legs, is not required. The keyframes are processed to generate a head data structure that comprises a 3D representation of the head area of the user together with adjusted keyframes, which enable an image based rendering procedure for re-presenting the head area.

Furthermore, a body of the user is modeled based on a parametric body model, PBM, template with an associated base texture, which is adjusted to match the skin tone and lighting of the captured person's face. The PBM template is further adjusted to be combined with the head data structure, in particular the 3D representation. The shape and poses of the PBM of the so combined avatar may be further adjusted according to user measures or shape morphs, to name only a few.

The resulting avatar can be rendered to photorealistic images from arbitrary viewing angles, wherein the most important details of the user respectively his avatar, namely the head and face region, are rendered with an image based rendering scheme, while the less important parts can be rendered with texture based rendering schemes.

The images can then be used for various applications like virtual reality, VR, applications or augmented reality, AR, applications.

The improved modelling concept further allows to generate annotated images from the avatar which not only includes a rendered color image but also includes a 2D mesh associated with the image such that even a better inclusion into VR/AR applications is possible. For example, virtual fitting room applications can be performed more realistically with such annotated images.

A PBM is e.g. a 3D computer model of a generic body, in particular a human body. Such body models are usually either hand-crafted or created from large data sets of 3D scans of actual humans. This model can be parameterized, i.e., its shape as well as its pose is given by a set of parameters. Such parameters may include the body height, the length of arms, the size of thighs, or the shoulder width for defining the shape, or the angle in which certain joints like elbows or knees etc. are bent, and in which direction the pose is defined. By setting these parameters, a human operator or a computer program can arbitrarily create many 3D models that resemble human bodies, not only in visual appearance but also in terms of proportions.

For example, the improved modelling concept implements a method for generating a 3D avatar using a computer system. The computer system has access to a PBM template and to a base texture map associated with the PBM template. The PBM template comprises a 3D representation of a surface of a template body together with corresponding 3D landmarks and is adapted to be parametrized at least with respect to shape and pose.

The PBM template may further comprise a representation of an armature or a skeleton of the template body and/or semantic information of the template body. For example, the semantic information may define associations between parts of the surface and the armature or skeleton. It may also define associations to body parts and/or landmarks on the body, to name only a few. The PBM template may further be adapted to be parametrized with respect to sizes of body parts and/or angles of joints, which e.g. further defines shape and pose.

The method comprises receiving a set of keyframes captured with a digital camera, which optionally includes a depth sensor, each of the keyframes including a color image having a different viewing angle of at least a head area of a user, together with 3D metadata. Such metadata may include head transformation data, e.g. a relative orientation of the user's head, blend shapes, a gaze direction, face tracking information, intrinsics from the camera and/or the optional depth sensor, to name only a few. The metadata may be provided directly from the capturing system or sub-system or be calculated separately. For example AR frameworks like ARKit on iOS or ARCore on Android may provide at least some of the metadata. If the camera includes a depth sensor, the keyframes may include a depth map associated with the color image. The depth maps may also be generated through a machine learning algorithm, for example.

A head data structure is generated by identifying, in each of the keyframes, a plurality of regions, including at least a skin region, a neck region, and a foreground region with matting, and adjusting, in the neck region of each of the keyframes, a brightness and/or alpha values of pixels of the respective color image. A 3D representation of the head area of the user is generated based on at least the keyframes, in particular the images of the keyframes, and on the 3D metadata, the 3D representation including 3D landmarks associated with the head area. If depth maps are available, these may be employed, too. The 3D landmarks may identify specific points in the 3D representation like eyes, ears, nose etc. or significant lines within the face. The head data structure is assembled such that it comprises the 3D representation and the adjusted keyframes, wherein the head data structure is adapted for image based rendering.

A textured PBM is generated based on the PBM template by determining a lighting direction profile, a color profile and a luminance profile from the skin region of at least one of the keyframes, and adjusting a color of the base texture map based on the lighting direction profile, the color profile and the luminance profile.

The avatar is generated by assembling the head data structure and the textured PBM. This further includes aligning the 3D representation of the head area with the textured PBM based on the 3D landmarks of the 3D representation of the head area and the 3D landmarks of the textured PBM. The generation further includes adjusting a shape of the textured PBM, e.g. a head area of the textured PBM, to the 3D representation of the head area.

The improved modelling concept brings several advantages:
1. It is easy to use and requires no special hardware or skills. Smartphones like any recent iPhone or a variety of Android devices have suitable cameras and sometimes even depth sensors.
2. It does not capture any visual material of the user's body, which is favorable in terms of data security, privacy and user acceptance. Other solutions which capture the entire body capture full body footage and usually upload it to server systems for processing.
3. It utilizes the smartphone sensor's available resolution for the body part which matters the most to users: their face, head and hair. Other solutions which capture the entire body cannot capture the user's face and head in a resolution suitable for the above mentioned applications.
4. It may derive an arbitrary number of complex body measurements (e.g. back width, over bust circumference, ...) from a few simple measurements (e.g. body height, waist circumference, ...)
5. The improved modelling concept allows to create photo-realistic images from these avatars where the camera perspective, the field of view and the background can be changed and chosen even after capturing the avatar.

In some implementations of the method the 3D metadata further comprise head transformation data for each of the keyframes and intrinsics of the camera and, if available, the optional depth sensor. Generating the head data structure in this case further comprises, before identifying the plurality of regions, reorienting at least a subset of the keyframes by determining transformation matrices of the camera and, if available, the optional depth sensor based on the intrinsics of the camera and the optional depth sensor, and determining, for each of the color images of the subset, a rotation angle based on the associated head transformation data, the transformation matrices of the camera and a predefined viewing angle, e.g. an upright viewing angle, and optionally the transformation matrices of the depth sensor. A rotation is performed on the color images based on the respective determined rotation angle, and the head transformation data are updated based on the respective determined rotation angle. Hence the color images, optionally together with their depth maps, may be reoriented or transformed to represent an upright impression, in particular the same angular impression, which may be favorable for algorithms processing these images.

For example, identifying the plurality of regions may further include performing a semantic segmentation of the keyframes, in particular using a machine learning algorithm. Such machine learning algorithm may have improved performance on the reoriented images.

In some implementations of the method the computer system further has access to a set of shadow maps associated with the PBM template and to a set of light maps associated with the PBM template. Adjusting the color of the base texture map further comprises selecting a light map from the set of lighting maps and a shadow map from the set of shadow maps based on the lighting direction profile, and adjusting the selected light map and the selected shadow map based on the luminance profile. The base texture map of the PBM template is blended with the adjusted light map and the adjusted shadow map. Further, a color of the blended base texture map is adjusted based on the color profile.

Hence the color impression given by the texture of the PBM template in the body region matches better the impression of the color images used for rendering the head area.

For example, in such implementations, determining the color profile and the luminance profile and/or determining the lighting direction profile comprises performing a luminance clustering of the skin region of the at least one keyframe into a predefined number of distinct skin groups, and, optionally comparing the relative luminance of such clusters. Further, adjusting the selected light map and the selected shadow map comprises performing a luminance clustering of the selected light map and the selected shadow map into distinct map groups associated with the skin groups and scaling a luminance of each map group based on a luminance of the associated skin group. Further, adjusting the color of the blended base texture map comprises determining chromaticity information in each of the skin groups and adjusting a color distribution of each map group based on the chromaticity information of the associated skin group.

This further increases the ability to match the color impression of the body part to the head area, in particular face area.

In some implementations generating the head data structure further comprises identifying a chin region in each of the keyframes, and defining, in each of the keyframes, an extended neck region by extending the respective identified neck region towards the chin region.

Then, in the extended neck region of each of the keyframes, a brightness of each pixel within the respective color image is adjusted based on a lowest brightness of pixels in a ray in an upwards face direction originating from said pixel to be adjusted. This approach is based on the idea that introducing a shadow below the chin is not as obvious as introducing a brighter region. Therefore we define an extended neck region in the keyframe that is created by extending the neck region towards the face. Within this extended neck region, for each pixel we search along a ray in the upwards face direction for the pixel with the lowest brightness and apply this brightness value to the pixel where we started searching from. This approach usually does not change much within the chin since the lowest part of the chin anyway starts to get darker as long as the light source in the scene is not pointing from below the face. Since we extended the region in the direction of the top of the face, it is very unlikely that pixels that should be darkened are missed. For neck pixels this makes sure that they are not brighter than the lowest part of the chin and otherwise just introduces some shadow effect.

In addition or as an alternative to adjusting the brightness in the extended neck region, in the neck region of each of the keyframes, alpha values of pixels of the respective color image are adjusted based on a distance from the respective chin region to the pixels to be adjusted. Such alpha values may represent an alpha mask or blending mask, which improves a seamless transition between the captured head and the virtual body model.

For example, in such implementations, generating the head data structure comprises, after adjusting the brightness in the extended neck region, blurring a brightness in the extended neck region along a chin outline curve that results from a transition between the neck region and the chin region. This may further support to avoid vertical pattern in the neck region.

In some implementations the head data structure is adapted for image based rendering based on unstructured Lumigraph, ULG, rendering or surface light field, SLF, rendering depending on the adjusted keyframes. This may for example include SLF rendering as described in EP application 21155801.0 in the name of Reactive Reality AG, which is incorporated by reference in its entirety.

In some implementations the computer system has access to a plurality of PBM templates. In such implementations generating the textured PBM comprises selecting the PBM template from the plurality of PBM templates based on a size information, in particular height information, and/or based on gender information. Such information may be provided by the user or an operator.

In some implementations a pose and/or shape of the PBM may be changed either before assembling the avatar or afterwards. The change may be performed morph-based such that for example specific body properties like weight, shoulder width, arm length, or leg lengths etc. are selected to be changed, as defined in the PBM. The change may be determined with a slider in a user interface or by any other way of input. The selected changes may result in one or more body morphs which change the basic body shape through linear transformations.

Furthermore, body intersection may be determined to adjust the PBM's or avatars' body pose in a realistic way. If the selected changes are made in advance of the assembling of the avatar, the respective alignment of head data structure and textured PBM is made as described above. However, if the selected changes are made to the final avatar, the head data structure and the textured PBM may need to be re-aligned according to the performed changes.

As an alternative or in addition to the described change of body properties or other body morphs, changing the shape of the PBM may also be performed measurement-based.

For example, the method further comprises receiving a set of body measurements, each of the body measurements comprising a measurement value and being associated with a measurement instruction being defined with respect to the PBM template, and determining a set of shape morphs for the PBM template based on the measurement instructions. For example, this defines what morphs will have to be applied, but not yet to which extent, e.g. which morph factor or the like.

To this end, the set of shape morphs is applied, e.g. with different factors, until resulting measurements match the user's body measurements as good as desired.

For example, the method further includes performing an optimization on the PBM template or the textured PBM by applying one or more of the set of shape morphs to determine an intermediate reshaped PBM, and performing the measurement instructions on the intermediate reshaped PBM to determine respective intermediate values, until an error function is minimized. The error function is based on differences between the respective measurement values and the corresponding intermediate values resulting from the associated measurement instructions.

For example, the measurement instructions and their application are defined as described in more detail in EP application 21170737.7 in the name of Reactive Reality AG, which is incorporated by reference in its entirety.

In some implementations generating the 3D representation of the head area comprises creating a facial base model based on face landmarks of at least a subset of the keyframes, creating a hair proxy by fitting a plane to the facial base model based on the face landmarks, and reconstructing the 3D representation by merging the facial base model with a 3D point cloud sampled from the fitted plane. This plane point cloud may be merged with the face mesh vertices and reconstructed via Poisson surface reconstruction in order to create a complete head mesh with smooth transitions.

In some implementations generating the 3D representation of the head area comprises, in addition or as an alternative, generating the 3D representation using a depth map fusion algorithm based on the color images, depth maps, intrinsics of the camera and face tracking information. The intrinsics and the face tracking information are comprised by the 3D metadata. The depth maps may be captured with a depth sensor of the camera or generated through a machine learning algorithm, for example. If the depth maps are captured with a depth sensor of the camera, the depth map fusion algorithm may be further based on intrinsics of the depth sensor. The depth map fusion algorithm may particularly be configured for reconstructing non-rigid scenes.

The ability to reconstruct non-rigid scenes is favorable since a person will never hold perfectly still while capturing. Moreover, when moving the camera during capturing, the shoulder will also move to some extent which creates non-rigidity as soon as the shoulder is visible in the image. All these factors of non-rigidity in the scene could easily reduce reconstruction quality of the face when using an algorithm that expects rigid scenes even though the face itself can be considered as almost rigid as long as the captured person does not change its gesture too much.

In some implementations the 3D metadata further comprise intrinsics of the camera and the depth sensor, and generating the 3D representation of the head area is further based on the color images and the intrinsics of the camera and the depth sensor.

In some implementations the method further comprises a capturing process for capturing the set of keyframes. The capturing process comprises the user capturing distinct keyframes for the set of keyframes, evaluating positions of the digital camera and/or viewing angles of the captured keyframes, e.g. by the computer system, in order to determine a capturing coverage, and providing feedback to the user based on the determined capturing coverage, the feedback including instructions for moving the camera, until a coverage criterion based on the determined capturing coverage is fulfilled.

The improved modelling concept further relates to a computer implemented method for generating a perspective 2D image from a 3D avatar. For example, such 3D avatar is generated with a method according to one of the implementations described above. The method comprises selecting a viewpoint relative to the avatar, rendering the textured PBM of the avatar based on the selected viewpoint using a texture mapping algorithm employing the blended base texture map, rendering a head area of the avatar using an image based rendering algorithm based on the selected viewpoint, the 3D representation and the adjusted keyframes, and combining the rendered textured PBM and the rendered head area to generate the perspective 2D image.

The image based rendering algorithm may be an unstructured Lumigraph rendering, ULR, algorithm or a surface light field, SLF, rendering algorithm, e.g. as described in EP application 21155801.0 in the name of Reactive Reality AG, which is incorporated by reference in its entirety.

The rendering process respectively the rendered images can be used in 3D applications, such as teleconferences, virtual dressing rooms, health & fitness applications etc.

In some implementations of such method, the 3D metadata of each of the keyframes comprise gaze direction information of the user. Rendering the head area in this case comprises selecting and/or weighting the adjusted keyframes for the image based rendering algorithm based on the gaze direction information. This results in more natural avatar behavior.

In some implementations of such method the textured PBM comprises semantic information about body landmarks and regions of a body, and rendering the textured PBM and the head area includes mapping of the regions into the perspective 2D image, e.g. one or more semantic maps of the perspective 2D image. The method further comprises computing a set of body outline points by intersecting the 3D representation of the textured PBM with a plurality of planes, and creating a 2D mesh associated with the rendered perspective 2D image together with 2D semantic information that includes at least an outline based on the outline points, regions of the body and the keyframes, the body landmarks and face landmarks comprised by the 3D metadata of each of the keyframes. Particularly the outline improves applicability of the annotated images in AR/VR applications for different 3D body poses and/or viewing angles.

The resulting images, mesh and semantics can be used for virtual try-on and mix & match applications which are based on 2D garment and accessory images. For example, they may be applied to garment models as described in EP patent EP 03038053 B1 in the name of Reactive Reality AG, which is incorporated by reference in its entirety.

Furthermore, the images and annotations can be used to create large image datasets from different viewing angles, with different backgrounds, garments etc. These image datasets may be used for machine learning purposes.

According to one embodiment of the improved modelling concept, a computer program product for implementing the improved modelling concept comprises a non-transitory computer-readable storage medium and computer program instructions stored therein, enabling a computer system to execute a method according to one of the implementations described above.

Furthermore, a computer system may have a processor and a storage medium having computer program instructions stored therein, enabling the processor to execute a method according to one of the implementations described above.

### BRIEF DESCRIPTION OF THE DRAWINGS

The improved modelling concept will be explained in more detail in the following with the aid of the drawings. Elements and functional blocks having the same or similar function bear the same reference numerals throughout the drawings. Hence their description is not necessarily repeated in following drawings.

In the drawings:
- Figure 1: shows an example modelling flow according to the improved modelling concept;
- Figure 2: shows example camera configurations in a capturing process;
- Figure 3: shows an example keyframe with face landmarks;
- Figure 4: shows an example keyframe with semantic regions;
- Figure 5: shows an example keyframe before and after a color adjustment;
- Figure 6: shows an example of a 3D representation of a head area with face geometry and a hair proxy;
- Figure 7: shows a further example of a 3D representation of a head area;
- Figure 8: shows an example of a skin area of a keyframe;
- Figure 9: shows an example of a base texture map;
- Figure 10: shows an example of a light map;
- Figure 11: shows an example of a shadow map;
- Figure 12: shows an example of a blended texture map;
- Figure 13: shows an example of a 3D avatar body with skin adjusted color;
- Figure 14: shows an example result of an alignment between a head data structure and a textured PBM;
- Figure 15: shows examples of body property shape morph results;
- Figure 16: shows examples of measurement based shape morph results;
- Figure 17: shows an example image generation flow according to the improved modelling concept;
- Figure 18: shows a further example image generation flow according to the improved modelling concept;
- Figure 19: shows an example of a PBM with semantic regions;
- Figure 20: shows an example of avatars with plane intersections and resulting outline points; and
- Figure 21: shows an example system for performing embodiments according to the improved modelling concept.

### DETAILED DESCRIPTION

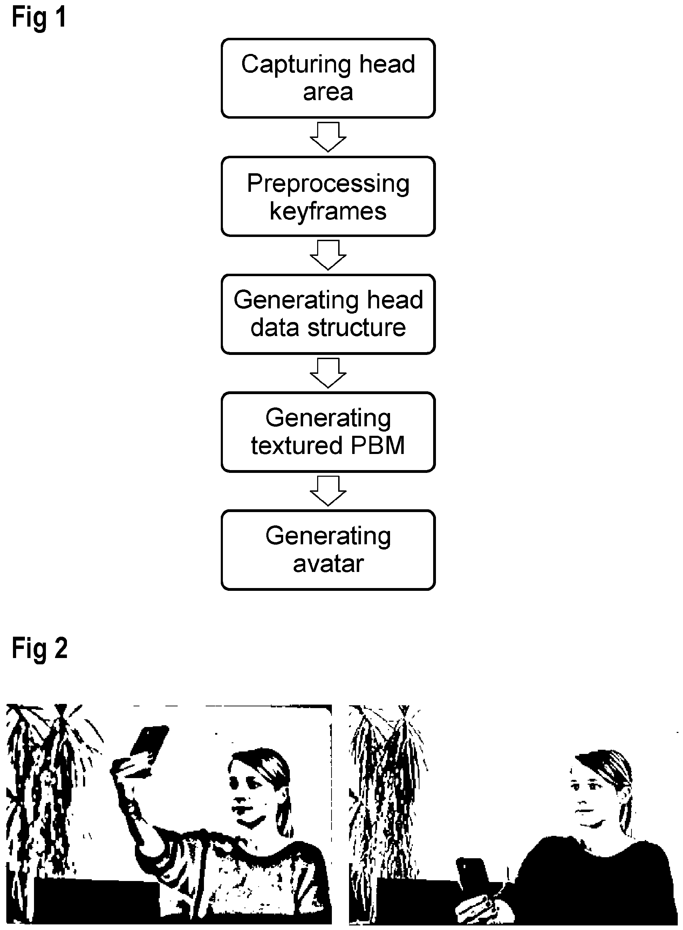

Figure 1 shows an example modelling flow according to the improved modelling concept. In the following, the respective processing steps as shown in Figure 1 will be explained in more detail in conjunction with the subsequent Figures.

As can be seen from Figure 1, the improved modelling concept is based on that capturing of the head area of a user. To this end a suitable device including a camera and, optionally, a depth sensor is employed. If the user captures the head area himself/herself, it may be advantageous to use a mobile phone with a front facing camera together with an optional front facing depth sensor, such that visual feedback may be given to the user via the display of the mobile phone.

Generally, capturing of the head area of the user may be performed also by a third person, as long as the capturing process delivers color images, optionally with associated depth maps. In each case, the result of the capturing process is a set of keyframes, each of the keyframes including a color image having a different viewing angle of at least the head area of the user, together with some 3D metadata and optionally a depth map associated with the color image.

Referring now to Figure 2, example camera configurations in a capturing process are shown. For example, in the left image the user holds the camera slightly above her head, while in the right image the camera is positioned to capture an image from below the head.

While a sufficient set of keyframes may be composed by the user or the operator on its own, this process may be supported by guidance from the system, e.g. the mobile phone. An example process is described in the following.
1. The user follows a proposed motion path, e.g. a digit 8 before his/her head. There may be different capturing motions (up-down, digit 8, zig zag, cross, spiral) which all have the same purpose of capturing a wide range of different viewing angles on the user's head as shown in Figure 2.
2. The system tracks the user's face position, landmarks and 3D geometry e.g. via a parametrized face model, ARKit tracking etc.
3. While the user is guided to perform the scanning motion, the system warns if motions are wrong or coverage is bad. These instructions and warnings can be visual, e.g. through a coverage map, or as audio, e.g. verbal instructions like "move closer".
4. For the guidance, the algorithm may track the capturing coverage. Based on the face tracking information it is possible to virtually draw a camera path relative to the face without any reconstruction of the head needed. This path including its frame density information can be used to estimate a capturing coverage. In other words this makes it possible to estimate what parts of the user's head were sufficiently captured and which not. To visualize this information one can show the actual capturing path together with the desired path for the system to work best and a heatmap for the density of keyframes to help the user perform appropriate capturings.
5. The system captures keyframes at regular angular intervals relative to the face to achieve an optimal coverage of the head. Keyframes comprise color images and camera positions and optionally depth images or depth maps.
6. The system may issue warnings if lighting is too high/low or asymmetric and/or if the user wears glasses or other unsupported accessories.
7. The system may detects blinks, laughs, speaking to exclude these images from keyframe selection. This leads to a coherent set of images that show the user always in a similar state.
8. All the collected data gets uploaded or otherwise made available to the subsequent processing steps.

An output of the capturing process may be a set of synchronized keyframe data including color/RGB images, optional depth maps and keyframe metadata like camera intrinsics, depth sensor intrinsics, head transformation (face position/orientation relative to camera coordinates), face landmarks and geometry (vertices and UV mapping), blend shapes, gaze direction.

Referring back to Figure 1, the processing of the capturing of the head area may be separated in the creation of an image-based rendering representation of the captured user's head and the creation of a virtual avatar body. In the end the two parts need to be combined to get a realistic visual representation of an avatar that looks like the user.

Hence in the following step, which is an optional step, the keyframes from the capturing process are preprocessed.

E.g. the process is about image orientation and cropping using detected facial landmarks. We evaluate the orientation of the user's face based on the tracking information of the face. Therefore we project the 3D upwards direction of the face we get e.g. from ARKit into our 2D camera image using the camera intrinsics/extrinsics and use this 2D projection of the upwards direction of the face to determine the rotation angle for the image. To still have the extrinsics/intrinsics consistent with the rotated images and the 3D tracking information, we accordingly update the camera extrinsics based on the image rotation we applied. This can be done by applying the appropriate rotation matrix to the camera's extrinsics transformation matrix. This gives upright face images which can be a huge benefit when running any following task on the 2D image like for instance segmentation algorithms that were trained based on upright images of faces. Using this step we get robust against any device orientation and face orientation in the scene.

In other words, reorienting at least a subset of the keyframes is performed by determining transformation matrices of the camera and, optionally, the depth sensor based on the intrinsics of the camera and, if available, the depth sensor, and determining, for each of the color images of the subset, a rotation angle based on the associated head transformation data, the transformation matrices of the camera and, if available, the depth sensor and a predefined viewing angle, e.g. an upright viewing angle. A rotation is performed on the color images based on the respective determined rotation angle, and the head transformation data are updated based on the respective determined rotation angle.

Further, the preprocessing may include a delighting / deshading algorithm to remove direct lighting effects from the user's images, e.g. shadows of the hands, highlights and reflections on the skin, rectify asymmetric lighting.

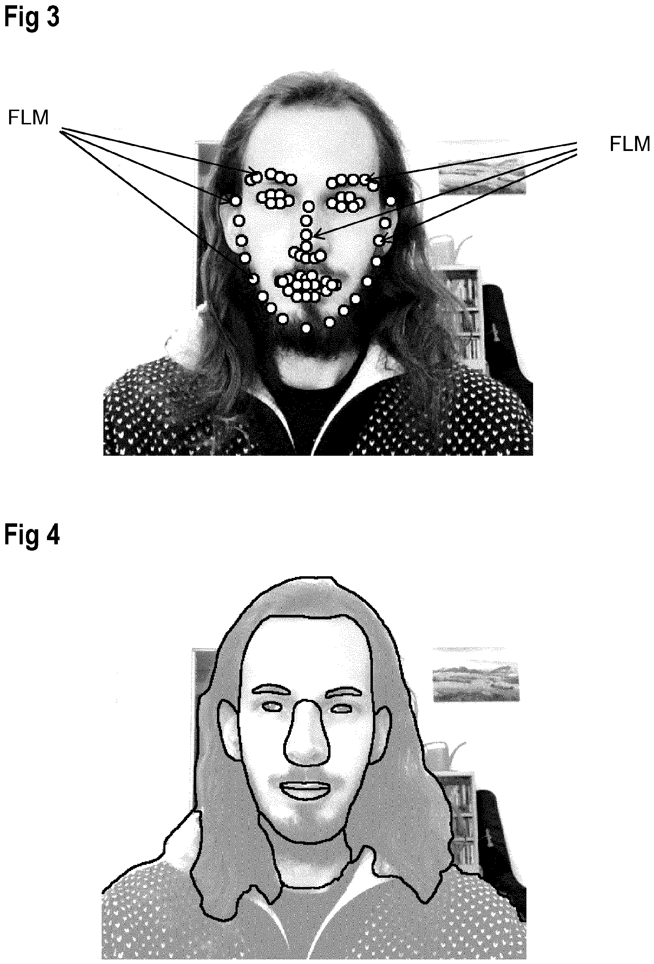

Returning back to Figure 1, in the following processing step the head data structure is generated. This includes identifying, in each of the keyframes, a plurality of regions, including at least a skin region and a neck region. For example, this is done via image segmentation (classification of background vs. user) and semantic face segmentation (skin, hair, headwear/glasses/jewelry, neck, ears, nose, eyes, eyebrows, mouth, torso). An example of a segmented image is shown in Figure 4, where various segments are delimited from each other.

This further includes adjusting, in the neck region of each of the keyframes, a brightness and/or alpha values of pixels of the respective color image.

For example, using the semantic regions of neck, chin and potentially hair, the algorithms create a blending mask for the neck region for each keyframe. The blending mask makes sure there is a seamless transition between the captured head and the virtual body model. The neck blending can basically be divided into two different steps. One of them just modifies the alpha value of the keyframes to generate a blending transition at the neck and the other one just modifies the RGB color values in the neck region to create a more realistic appearance within the blended neck region.

**Modifying the alpha mask:** To modify the alpha mask we just modify alpha values within pixels that were labeled as neck by the region identification, e.g. semantic segmentation algorithm. This helps to avoid unwanted effects if the facial landmarks are not very accurate. Based on the chin line we get from the facial landmarks and the upwards direction within the face we can calculate a vertical distance from any neck labeled pixel to the chin line. Based on the available distance range and some relative minimum and maximum range for the blending we calculate a chin-to-pixel distance range in which we transition alpha from opaque to completely transparent. Analyzing the available range in the neck may be employed if a person e.g. is wearing a turtle-neck, which would just reveal a very short portion of the neck, to have the alpha transition above the garment for smoother blending.

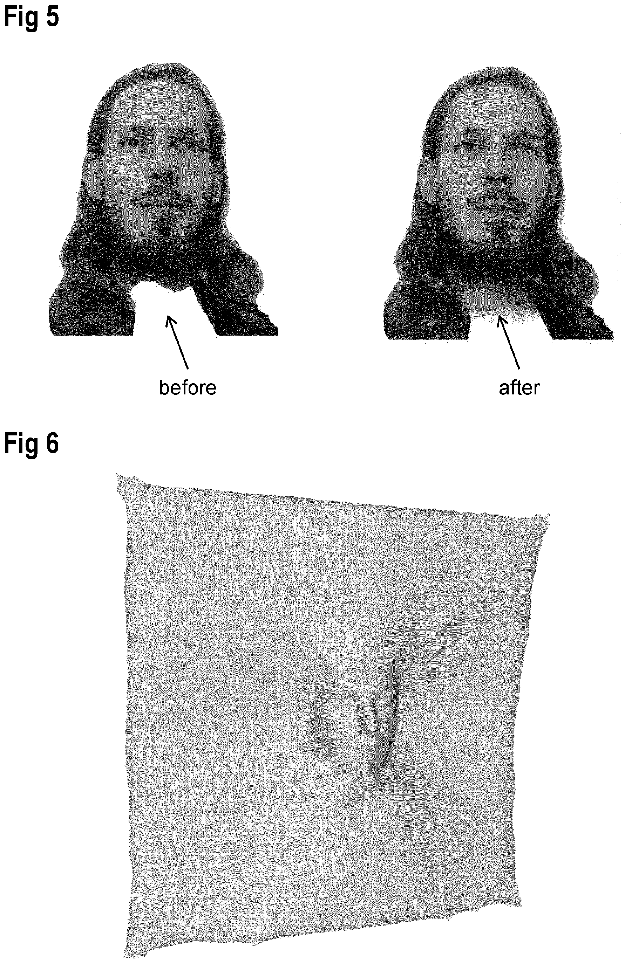

An example of the blending is shown in Figure 5, with a keyframe before blending on the left side and after blending on the right side, wherein blending includes a neck alpha adjustment and a neck brightness adjustment.

**Modifying RGB color values:** When just modifying the alpha value of the neck region, it may happen that due to slightly different lighting of the captured head and the PBM the blending of the real head's neck into the PBM neck leads to weird appearance. This is mostly obvious if the neck color tone is brighter in the real head keyframe than in the PBM. Therefore we modify the color values of the head keyframes in a way that the neck region gets darkened.

Since it is hard to reliably detect a pixel-perfect chin line position in our keyframes, simply darken pixels below the chin-line by a certain amount does not lead to desired effect. If we would do that we would easily introduce bright bars below the chin if the chin line was detected too low or darken parts of the chin rather than just darkening the neck. The preferred approach is based on the idea that introducing a shadow below the chin is not as obvious as introducing a brighter region.

Therefore what we do is the following: We define an extended neck region in the keyframe that is created by extending the semantic segmentation neck region towards the face respectively the chin region, e.g. based on a small portion of the head height to be invariant against different sized heads in image-space. Within this region, for each pixel we search along a ray in the upwards face direction for the pixel with the lowest brightness and apply this brightness value to the pixel where we started searching from. This approach usually does not change much within the chin since the lowest part of the chin anyway starts to get darker as long as the light source in the scene is not pointing from below the face. Since we extended the region in the direction of the top of the face, it is very unlikely that pixels that should be darkened are missed.

For neck pixels this makes sure that they are not brighter than the lowest part of the chin and otherwise just introduces some shadow effect based on the combination of the darkening and the alpha blending without the need for a pixel-perfect chin-line detection. To avoid vertical patterns in the neck region we may introduce blurring the brightness in this region along the chin outline curve. This makes sure to introduce as few pixels from within the brighter part of the face into the blurring of a pixel as possible. If we would just blur using a horizontal kernel or an elliptic kernel we would easily introduce brightening in the chin region again.

It follows the generation of a 3D representation of the head area of the user based on at least the keyframes, in particular the images of the keyframes and on the 3D metadata, the 3D representation including 3D landmarks associated with the head area. If depth maps are available, the generation of a 3D representation may be further based on these depth maps.

This can be done in different ways. For example a head geometry proxy is created: using the face landmarks and the captured mesh, we create a facial base model. The base model is then extended with a hair proxy: the hair proxy does not need to capture the entire head in full detail, but only approximate it well enough for image-based rendering. This has a big advantage over full geometric reconstruction: it is much quicker and can run on mobile devices.

To produce such proxy geometry, a plane is fitted to the back of the face mesh. This may be done using the landmark information extracted from the mesh. We then sample this plane into sparse samples to produce a 3D point cloud. The plane point cloud is merged with the face mesh vertices and reconstructed via Poisson surface reconstruction in order to create a complete head mesh with smooth transitions. An example result of such process is shown in Figure 6.

As an alternative, if depth maps are captured or created with a machine learning algorithm, we use a depth map fusion algorithm that can deal with non-rigid scenes to create full 3D geometry of head and upper body, based on the captured data we have, e.g. depth images, color, images and face tracking information including camera intrinsics.

The ability to reconstruct non-rigid scenes is advantageous since a person will never hold perfectly still while capturing. Moreover, when moving the camera during capturing, the shoulder will also move to some extent which creates non-rigidity as soon as the shoulder is visible in the image. All these factors of non-rigidity in the scene could easily reduce reconstruction quality of the face when using an algorithm that expects rigid scenes even though the face itself can be considered as almost rigid as long as the captured person does not change its gesture too much. After the geometry of the head is reconstructed we can optimize the keyframe viewing transformations with respect to the geometry based on the face tracking information and analyzing the reprojection error among different keyframes.

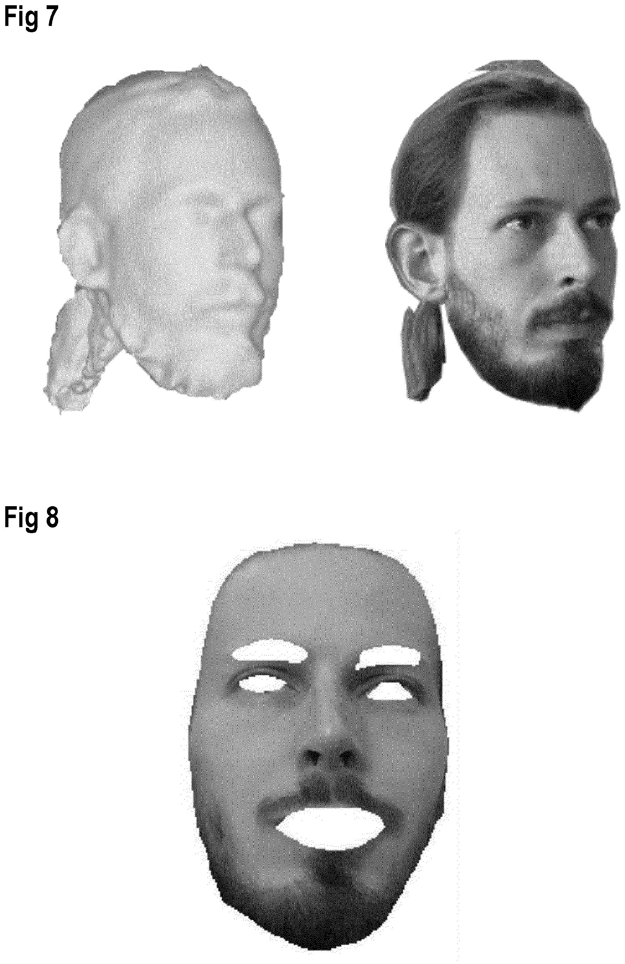

Finally the head data structure comprising the 3D representation and the adjusted keyframes is assembled, the head data structure being adapted for image based rendering. An example result of such process is shown in Figure 7, wherein the left image shows the structure before the actual rendering and the right image shows the head after image based rendering.

For example the head data structure may comprise packed keyframes, similar to the preprocessing, but also contains semantic masks, landmarks and blended neck masks. Furthermore, it comprises the image based rendering, IBR, data structure, e.g. the geometry of the user's head or an approximation thereof and keyframe data used for image-based rendering.

The head data structure may be adapted for image based rendering based on unstructured Lumigraph, ULG, rendering or surface light field, SLF, rendering depending on the adjusted keyframes.

Returning back to Figure 1, in the following processing step a textured PBM is generated. To this end the computer system implementing the method has access to a PBM template and to a base texture map associated with the PBM template. The PBM template comprises a 3D representation of a surface of a template body together with corresponding 3D landmarks and is adapted to be parametrized at least with respect to shape and pose.

The user or operator may select the correct body model for the user's selected gender and possibly even from different models for different height ranges, depending on the height of the user.

The generation is based on the PBM template by determining a lighting direction profile, a color profile and a luminance profile from the skin region of at least one of the keyframes, and adjusting a color of the base texture map based on the lighting direction profile, the color profile and the luminance profile.

For example, we estimate a body texture that matches the lighting and color of the users face. To this end the method picks one of the keyframes, e.g. a frontal keyframe, i.e. a keyframe where the camera was level with the user's face, and use its semantic segmentation masks to identify likely skin areas like forehead, cheeks etc. An example result of such process is shown in Figure 8 with respective identified skin areas.

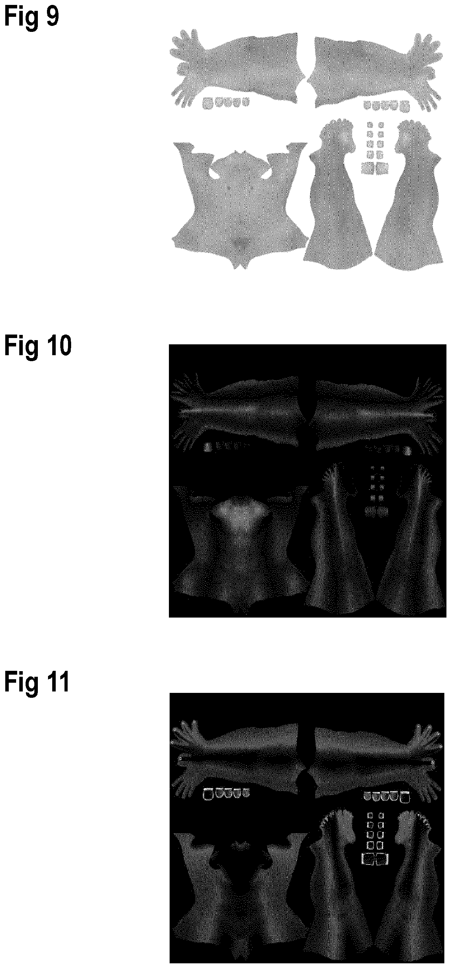

We detect the lighting direction and shading intensity based on the lighting/shading of the skin areas. This can be called lighting direction profile, color profile and luminance profile. Specifically, we subdivide the skin mask into smaller regions of interest and compare the relative luminance via their histograms. Given that the position of the regions is known, it is possible to estimate a vector in which the luminance increases/decreases and then map these vectors to different lighting directions. The lighting direction profile can then be used to select a shading template (i.e. a pair of shadow map and light map) that matches the lighting direction of the face. The shading template can be blended on top of the base texture map, e.g. an albedo map to produce a realistic shaded texture. An example of a base texture map can be seen in Figure 9.

To this end method the computer system may have access to a set of shadow maps associated with the PBM template and to a set of light maps associated with the PBM template. Figure 10 shows an example of a light map. Figure 11 shows an example of a shadow map.

Further, we adjust avatar body texture to match such direction and intensity: Since the shading templates by themselves only provide a sense of lighting direction, we prefer to adjust the shading templates to match the luminance range of the skin in the frontal keyframe. To achieve this, we first cluster the luminance of the skin in the frontal keyframe into distinct groups. We then perform a similar luminance clustering in the shading template (i.e. the same number of clusters). This allows us to create a mapping between the luminance of the skin region and the luminance of the shading template. The clusters in the shading template can then be scaled to match the luminance ranges of the frontal keyframe clusters. The shading template is then blended on top of the base texture map, increasing or decreasing the luminance accordingly.

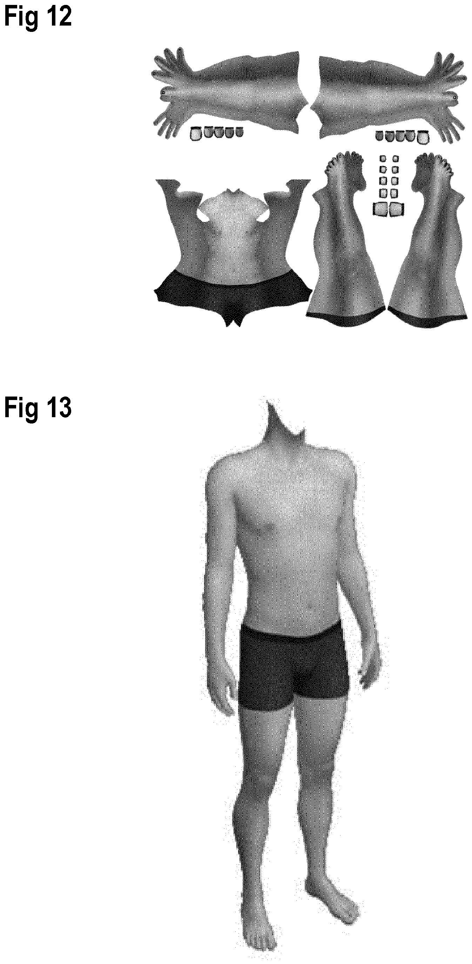

Using the same frontal keyframe and the resulting blended base texture map, we may further match colors by luminance and transfer the color from the frontal keyframe to the blended texture map: Since we created a mapping between the luminance clusters in both the frontal keyframe and the shading template, we can also reuse this information to match areas in the blended texture and the frontal keyframe. Based on the luminance clusters of the frontal keyframe, we build color histograms, e.g. in CIElab color space, and extract statistical data about the chromaticity of each cluster. The probability density function of each cluster in the blended texture is then adjusted to match that of the frontal keyframe clusters. To produce visually pleasing transitions between clusters we may apply an edgepreserving filter (guided filter) to the chromaticity channel of the blended texture. An example result of such process is shown in Figure 12 that shows an example of a blended texture map.

One may then adjust the PBM template to the user's body height. To achieve this we rely on body height changing morphs of the 3D PBM. Body morphs essentially deform the body in a preset manner. In this case, the morphs should adjust the PBM shape by changing its body height in a way that looks realistic. We can also combine or dynamically decide between different morphs if multiple are available in the PBM template. Then we can, based on the desired body shape, decide which one is most appropriate.

Finally, one collects all PBM and texture data to create a 3D avatar body, which we call the textured PBM. Figure 13 shows an example of such a textured PBM respectively 3D avatar body with skin adjusted color. This resembles a visual representation of a body matching the user's skin tone and potentially height.

Returning back to Figure 1, in the following processing step the avatar is generated by assembling the head data structure and the textured PBM. This further includes aligning the 3D representation of the head area with the textured PBM based on the 3D landmarks of the 3D representation of the head area and the 3D landmarks of the textured PBM. The generation further includes adjusting a shape of the textured PBM, e.g. a head area of the textured PBM, to the 3D representation of the head area. For example, we adjust PBM face morphs to fit the PBM head shape with the reconstructed head geometry.

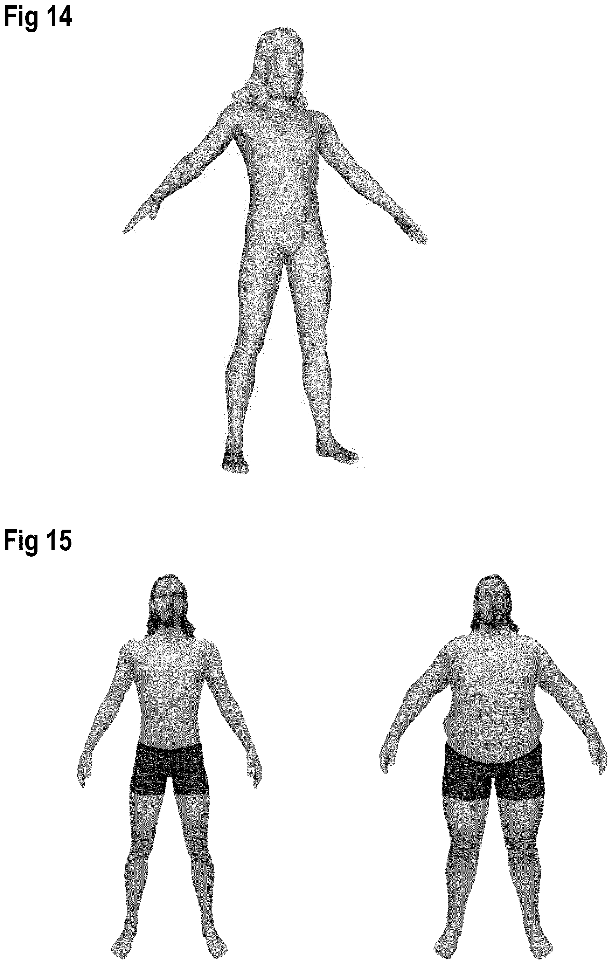

An example result of such assembling process is shown in Figure 14 as a shaded avatar.

Hence we collect all the head / IBR data and combine them with the PBM data to create the full avatar data. These full avatar data may be used for further processing, e.g. on a device of the user.

The body shape of the avatar may be edited, e.g. interactively. We use a representation of a full body avatar that includes semantics based on a parametric body model. This representation is capable of modifying its appearance based on the geometry of the PBM. Therefore whenever the pose or shape of the PBM changes this avatar representation adapts to it, e.g. the head positioning gets realigned to the PBM. This process outputs a 3D blended avatar representation with a user-modified body.

In the following, we describe two possible flows.

### Morph-based editing

1. The user picks a body property he/she wants to change (e.g. weight, shoulder width, arm length, leg length etc.). The capabilities of what can be modified are defined by the PBM.
2. The user interacts with a slider for the body part, which drives one or more body morphs which change the basic body shape through linear transformations. These transformations are just linear within the default pose of the PBM. To get the PBM shape in the currently selected pose, the PBM shape is modified in default pose and is then transformed into the currently selected pose based on its skeleton.
3. The system determines body intersections in real time to adjust the avatar's body pose in a realistic way (e.g. as the belly gets wider, the arms need to move away from the torso).
4. The system optionally calculates a set of body measurements in real time and shows the user while he/she is editing.

An example result of such morph-based editing process is shown in Figure 15, where a heaviness morph is applied. On the left side of Figure 15, the result is based on a lower weight, while on the right side the result is based on a higher weight.

### Measurement-based editing

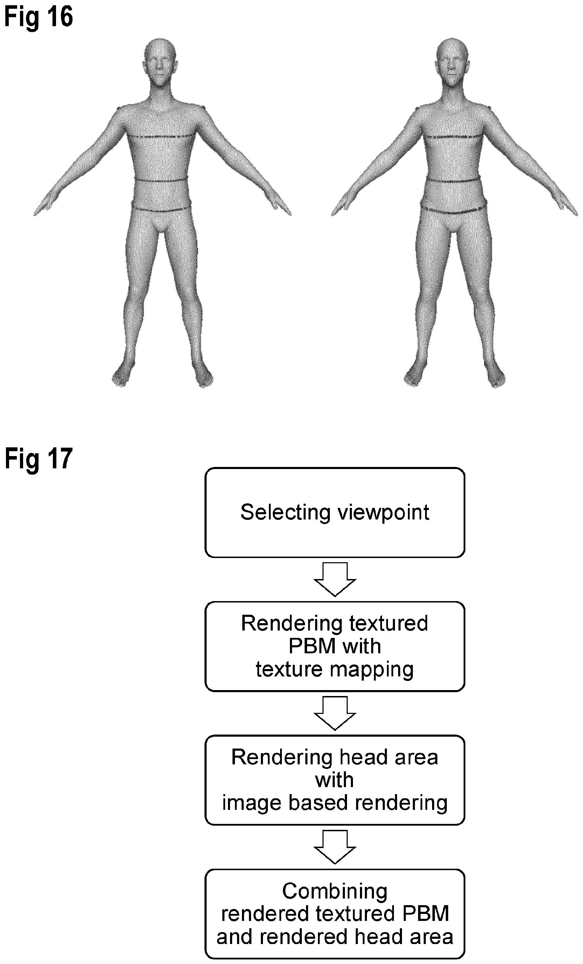

1. The user inputs a set of body measurements.
2. The system calculates the body shape morphs that best explain the input measurements.
3. Each measurement needs to be defined based on the PBM geometry with respective measurement instructions. The system supports as well polygonal line measurements as planar circumference measurements. Polygonal line measurements are defined by a set of barycentric coordinates on the surface of the geometry. In the case of planar circumference measurements, we first define a plane using three barycentric coordinates on the PBM, and then intersect such plane onto the PBM geometry to obtain a closed polygonal line on the geometry. If multiple closed polygonal lines are created by the intersection, we can detect the appropriate one based on the vertex indices of the barycentric coordinates in the polygonal line. It preferably should include one of the vertex indices that define the plane. For example, the measurement instructions and their application are defined as described in more detail in EP application 21170737.7 in the name of Reactive Reality AG, which is incorporated here by reference in its entirety. Figure 16 shows examples of measurement based shape morph results, wherein the lines on the body represent specific circumference measurements, for example.
4. For optimizing the PBM shape the optimizer also needs to be provided with a set of PBM shape morphs that should be allowed to be modified. More specifically, the optimizer is provided with a list of "exclusive morph groups". Each group can comprise an arbitrary number of different PBM shape morphs. This makes sense since there can be several shape morphs in the PBM that should never be applied together (e.g. a "heavy" and a "skinny" morph). Furthermore, the optimizer can be provided with a list of "linked morph groups". This type of group acts in the opposite manner of the aforementioned group type, by setting morphs which should always be modified together (e.g. left arm length and right arm length).
5. The optimizer itself is based on a gradient descent approach that tries to minimize the cost function as the sum of squared errors for all measurements. The error we use per measurement may be the difference in length of the measurement on the PBM and the desired measurement value, divided by the desired measurement value. This should avoid giving lower priority for measurements with smaller absolute values during optimization. We extended the standard gradient descent approach by having an intelligent selection of which morph to actually modify within each "exclusive morph group". The selected exclusive morph can also change during the iterations if appropriate. Since the PBM defines a reasonable range for all shape morphs, the optimizer ensures to never exceed these limits and therefore tries to find other morphs to reach the desired measurements as soon as one morph reaches its limits.

### Image based Rendering

Referring now to Figure 17, an example image generation flow according to the improved modelling concept is shown.

It implements a method for generating a perspective 2D image from a 3D avatar. For example, such 3D avatar is generated with a method according to one of the implementations described above. The method comprises selecting a viewpoint relative to the avatar, rendering the textured PBM of the avatar based on the selected viewpoint using a texture mapping algorithm employing the blended base texture map, rendering a head area of the avatar using an image based rendering algorithm based on the selected viewpoint, the 3D representation and the adjusted keyframes, and combining the rendered textured PBM and the rendered head area to generate the perspective 2D image.

The process will be described in more detail in the following.
1. Scene setup: the viewpoint and the camera properties (like field of view, FOV, projection centers, radial distortion etc.) of the rendering can be chosen arbitrarily with the only limitation that showing parts of the head that were not captured, will not give proper results. The camera location can be modified interactively in real-time even on mobile devices. This also enables the use of these avatars within AR scenes.
2. Backgrounds can be chosen arbitrarily, e.g. in the form of photos/images or full AR/VR scenes.
3. Smart pose adjustment: the avatar's head orientation follows the viewer (=camera location) using skeletal animation and a natural motion model. This is 1) realistic because humans do this as well, and 2) hides the back of the avatar's head from the viewer because the head backsides are usually not captured well by the user. If the viewer approaches the limits of natural head orientation, the avatar will turn the whole body, again following a natural, animated motion. Every pose adjustment may trigger another head alignment step, as described above in conjunction with the assembling of the avatar.
4. Rendering of the avatar's body using conventional texture mapping
5. Image-based rendering (e.g. ULG or SLF) of the avatar's head with blending enabled. Smart keyframe selection: the IBR algorithm may be extended to select / weigh keyframes not only by viewing direction, but also by the intended gaze direction of the avatar, as e.g. included in the keyframe from the capturing process. This may result in a more natural avatar behavior.

The process outputs a perspective rendered image of the avatar with an optional background image or AR/VR scene, optionally with lighting information of the avatar which can be used to adapt the lighting of e.g. garments and accessories in virtual try-on applications.

The rendering process / the rendered images can be used in 3D applications, such as teleconferences, virtual dressing rooms, health & fitness applications etc.

### Generation of Annotated Images

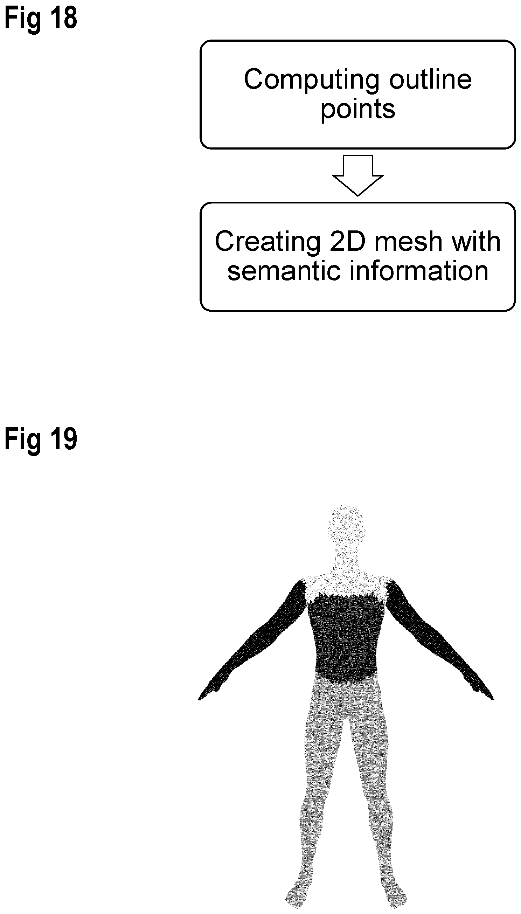

Referring now to Figure 18, a further example image generation flow according to the improved modelling concept is shown.

It is based on the process described in conjunction with Figure 17 and implements a method for generating annotated images, i.e. 2D color images with additional information that can be used e.g. in AR/VR applications. To this end the textured PBM of the avatar comprises semantic information about body landmarks and regions of a body, as shown for example in Figure 19, where different segments are marked with different colors, for example. Furthermore, rendering the textured PBM and the head area includes mapping of the regions into the perspective 2D image, e.g. one or more semantic maps of the perspective 2D image.

Referring back to Figure 18, a set of outline points is computed by intersecting the 3D representation of the textured PBM with a plurality of planes. Furthermore, a 2D mesh associated with the rendered perspective 2D image is created together with 2D semantic information that includes at least an outline based on the outline points, regions of the body and the keyframes, the body landmarks and face landmarks comprised by the 3D metadata of each of the keyframes. Particularly the outline improves applicability of the annotated images in AR/VR applications for different 3D body poses and/or viewing angles.

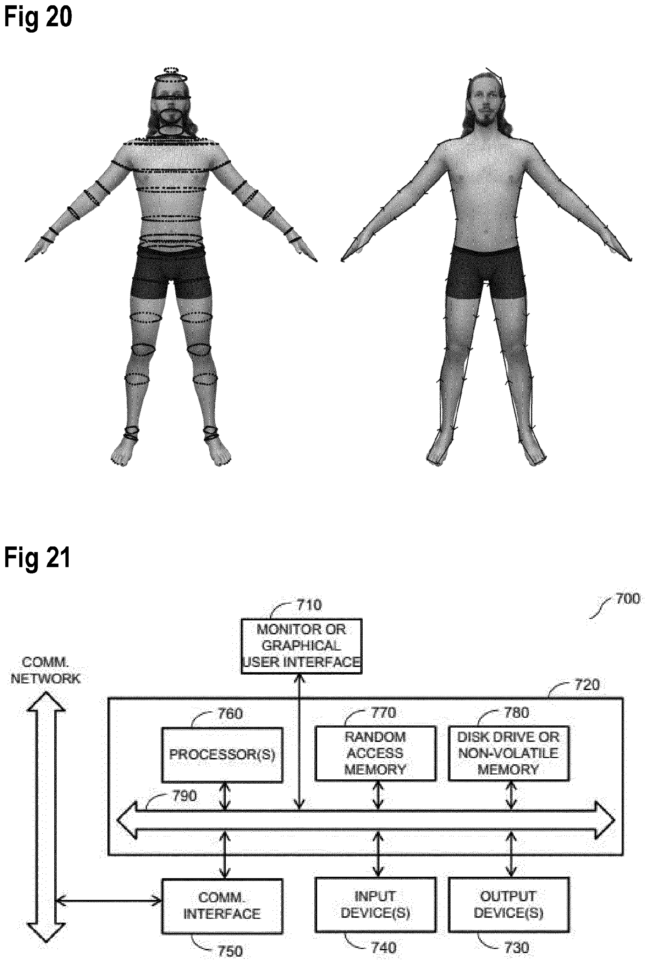

Results of this process are for example shown in Figure 20, where in the left image the intersection of planes and 3D representation of the textured PBM is visualized and where in the right image the outline of the rendered avatar is shown.

In an example implementation, e.g. for a virtual garment try-on application, the process receives a 3D blended avatar visual representation, a PBM bone to body semantics mapping, and outline extraction metadata for annotated images as an input. The process may rely on certain background information, e.g. depth layers of 2D virtual try-on scene compositing, from back to front:
1. Avatar hair
2. Garment backside (e.g. collars), starting from outermost garment going inside
3. Avatar except hair
4. Front side of garments, starting from innermost garment going outside

The process may include the following steps:
1. Determine desired viewing angle and FOV depending on the photo perspective of the 2D garments to be tried on and optionally on a 2D background.
2. Render the 3D avatar into 2D image using image-based rendering as described before, and render into several color-coded maps to identify the different body semantics (point 4 in this list).
3. Long hair preferably is shown behind the user and all garments. To do this, we use the semantic segmentation of the hair in the keyframes in order to identify the hair pixels in the rendered image.
4. Semantic information about body parts is transferred from the 3D PBM to the 2D avatar geometry by projection based on the knowledge of the skinning weights, which a PBM mesh vertex has, and the body semantics mapping for all PBM bones. Based on this we can determine a body semantic for each PBM vertex which gives us a body semantic label for each pixel in the 2D image, which can be used for e.g. overlap correction.
5. Computation of the 2D body model outline by intersecting the 3D PBM with planes to find the outermost points. This is preferred to ensure it works for all 3D body poses - just using a 3D->2D point correspondence may not be enough. This creates a set of body outline points in the annotated image.
6. 2D joint positions are computed through interpolation of neighboring outline points. Optionally we project 3D joint positions to obtain a corresponding 2D joint position.

The resulting images, mesh and semantics can be used for virtual try-on and mix & match applications which are based on 2D garment and accessory images. For example, they may be applied to garment models as described in EP patent EP 03038053 B1 in the name of Reactive Reality AG, which is incorporated by reference in its entirety.

Furthermore, the images and annotations can be used to create large image datasets from different viewing angles, with different backgrounds, garments etc. These image datasets may be used for machine learning purposes.

The improved modelling concept disclosed herein inter alia describes a two-staged mobile avatar creation process which is easier to follow because the user can keep the device in his/her hands at all times. In a first step, the user captures his/her head with a simple motion of the device. The disclosed system guides the user through the scanning motion while capturing all data from the front-facing sensor array (typically color and face tracking, and optionally depth). Audio and on-display instructions are shown. In a second step, the system determines the user's skin tone and lets the user adapt a virtual body shape to his/her dimensions. This virtual body shape is generated from a small number of easy-to-take measurements, and allows the system to derive an arbitrary number of complex measurements from the virtual body shape. The final composite result is a realistic 3D avatar with realistic dimensions and proportions which can be created within minutes. Moreover, we describe the photo-realistic rendering using image-based rendering and several applications including virtual try-on and data generation for machine learning.

Figure 21 is a block diagram of a computer system that may incorporate embodiments according to the improved modelling concept. Figure 21 is merely illustrative of an embodiment incorporating the improved modelling concept and does not limit the scope of the invention as recited in the claims. One of ordinary skill in the art would recognize other variations, modifications, and alternatives.

In one embodiment, computer system 700 typically includes a monitor 710, a computer 720, user output devices 730, user input devices 740, communications interface 750, and the like.

As shown in Figure 21, computer 720 may include a processor(s) 760 that communicates with a number of peripheral devices via a bus subsystem 790. These peripheral devices may include user output devices 730, user input devices 740, communications interface 750, and a storage subsystem, such as random access memory (RAM) 770 and disk drive 780.

User input devices 740 include all possible types of devices and mechanisms for inputting information to computer system 720. These may include a keyboard, a keypad, a touch screen incorporated into the display, audio input devices such as voice recognition systems, microphones, and other types of input devices. In various embodiments, user input devices 740 are typically embodied as a computer mouse, a trackball, a track pad, a joystick, wireless remote, drawing tablet, voice command system, eye tracking system, and the like. User input devices 740 typically allow a user to select objects, icons, text and the like that appear on the monitor 710 via a command such as a click of a button or the like. User input devices 740 may also include color and/or depth cameras, body shape and/or pose tracking sensors, hand tracking devices, head tracking devices or the like. User input devices 740 may particularly include various types of cameras, e.g. a DSLR camera or a camera of a smartphone or the like. Such a camera or smartphone or other mobile device may be connected to computer 720 over a communication network connected via communications interfaces 750.

User output devices 730 include all possible types of devices and mechanisms for outputting information from computer 720. These may include a display (e.g., monitor 710), non-visual displays such as audio output devices, etc.

Communications interface 750 provides an interface to other communication networks and devices. Communications interface 750 may serve as an interface for receiving data from and transmitting data to other systems. Embodiments of communications interface 750 typically include an Ethernet card, a modem (telephone, satellite, cable, ISDN), (asynchronous) digital subscriber line (DSL) unit, FireWire interface, USB interface, wireless connections like Wi-Fi and Bluetooth, and the like. For example, communications interface 750 may be coupled to a computer network, to a FireWire bus, or the like. In other embodiments, communications interfaces 750 may be physically integrated on the motherboard of computer 720, and may be a software program, such as soft DSL, or the like.

In various embodiments, computer system 700 may also include software that enables communications over a network such as the HTTP, TCP/IP, RTP/RTSP protocols, and the like.

RAM 770 and disk drive 780 are examples of tangible media configured to store data, including executable computer code, human readable code, or the like. Other types of tangible media include solid state drives, SSD, floppy disks, removable hard disks, optical storage media such as CD-ROMS, DVDs and bar codes, semiconductor memories such as flash memories, read-only-memories (ROMS), battery-backed volatile memories, networked storage devices, and the like. RAM 770 and disk drive 780 may be configured to store the basic programming and data constructs that provide the functionality of the improved modelling concept.

Software code modules and instructions that provide the functionality of the improved measuring concept may be stored in RAM 770 and disk drive 780. These software modules may be executed by processor(s) 760. RAM 770 and disk drive 780 may also provide a repository for storing data used in accordance with the present invention.

RAM 770 and disk drive 780 may include a number of memories including a main random access memory (RAM) for storage of instructions and data during program execution and a read only memory (ROM) in which fixed instructions are stored. RAM 770 and disk drive 780 may include a file storage subsystem providing persistent (non-volatile) storage for program and data files. RAM 770 and disk drive 780 may also include removable storage systems, such as removable flash memory.

Bus subsystem 790 provides a mechanism for letting the various components and subsystems of computer 720 communicate with each other as intended. Although bus subsystem 790 is shown schematically as a single bus, alternative embodiments of the bus subsystem may utilize multiple busses.

Figure 21 is representative of a computer system capable of embodying the improved modelling concept. It will be readily apparent to one of ordinary skill in the art that many other hardware and software configurations are suitable for such use. For example, the computer may be a mobile device, in particular a mobile phone, or desktop, portable, rack-mounted or tablet configuration. Additionally, the computer may be a series of networked computers.

Various embodiments of the improved modelling concept can be implemented in the form of logic in software or hardware or a combination of both. The logic may be stored in a computer readable or machine-readable storage medium as a set of instructions adapted to direct a processor of a computer system to perform a set of steps disclosed in embodiments of the improved modelling concept. The logic may form part of a computer program product adapted to direct an information-processing device to automatically perform a set of steps disclosed in embodiments of the improved modelling concept.

The specification and drawings are, accordingly, to be regarded in an illustrative rather than a restrictive sense. However, it will be evident that various modifications and changes may be made thereunto without departing from the scope of the invention as set forth in the claims.

## Claims

1. A method for generating a 3D avatar using a computer system, wherein
- the computer system has access to a parametric body model, PBM, template and to a base texture map associated with the PBM template; and
- the PBM template comprises a 3D representation of a surface of a template body together with corresponding 3D landmarks and is adapted to be parametrized at least with respect to shape and pose;
the method comprising:
- receiving a set of keyframes captured with a digital camera, in particular a camera including a depth sensor, each of the keyframes including a color image having a different viewing angle of at least a head area of a user, together with 3D metadata;
- generating a head data structure by
- identifying, in each of the keyframes, a plurality of regions, including at least a skin region, a neck region, and a foreground region with matting;
- adjusting, in the neck region of each of the keyframes, a brightness and/or alpha values of pixels of the respective color image;
- generating a 3D representation of the head area of the user based on at least the keyframes and the 3D metadata, the 3D representation including 3D landmarks associated with the head area; and
- assembling the head data structure comprising the 3D representation and the adjusted keyframes, the head data structure being adapted for image based rendering;
- generating a textured PBM based on the PBM template by
- determining a lighting direction profile, a color profile and a luminance profile from the skin region of at least one of the keyframes; and
- adjusting a color of the base texture map based on the lighting direction profile, the color profile and the luminance profile;
- generating the avatar by
- assembling the head data structure and the textured PBM;
- aligning the 3D representation of the head area with the textured PBM based on the 3D landmarks of the 3D representation of the head area and the 3D landmarks of the textured PBM; and
- adjusting a shape of the textured PBM, in particular a head area of the textured PBM, to the 3D representation of the head area.

2. The method according to claim 1, wherein the 3D metadata further comprise head transformation data for each of the keyframes and intrinsics of the camera, and wherein generating the head data structure further comprises, before identifying the plurality of regions, reorienting at least a subset of the keyframes by
- determining transformation matrices of the camera based on the intrinsics of the camera;
- determining, for each of the color images of the subset, a rotation angle based on the associated head transformation data, the transformation matrices of the camera and a predefined viewing angle, in particular upright viewing angle;
- performing a rotation on the color images based on the respective determined rotation angle; and
- updating the head transformation data based on the respective determined rotation angle.

3. The method according to claim 1 or 2, wherein the computer system further has access to a set of shadow maps associated with the PBM template and to a set of light maps associated with the PBM template, and wherein adjusting the color of the base texture map further comprises
- selecting a light map from the set of lighting maps and a shadow map from the set of shadow maps based on the lighting direction profile;
- adjusting the selected light map and the selected shadow map based on the luminance profile;
- blending the base texture map of the PBM template with the adjusted light map and the adjusted shadow map; and
- adjusting a color of the blended base texture map based on the color profile.

4. The method according to claim 3, wherein
- determining the color profile and the luminance profile and/or determining the lighting direction profile comprises performing a luminance clustering of the skin region of the at least one keyframe into a predefined number of distinct skin groups;
- adjusting the selected light map and the selected shadow map comprises performing a luminance clustering of the selected light map and the selected shadow map into distinct map groups associated with the skin groups and scaling a luminance of each map group based on a luminance of the associated skin group; and
- adjusting the color of the blended base texture map comprises determining chromaticity information in each of the skin groups and adjusting a color distribution of each map group based on the chromaticity information of the associated skin group.

5. The method according to one of claims 1 to 4, wherein generating the head data structure further comprises
- identifying a chin region in each of the keyframes;
- defining, in each of the keyframes, an extended neck region by extending the respective identified neck region towards the chin region;
- adjusting, in the extended neck region of each of the keyframes, a brightness of each pixel within the respective color image based on a lowest brightness of pixels in a ray in an upwards face direction originating from said pixel to be adjusted;
- adjusting, in the neck region of each of the keyframes, alpha values of pixels of the respective color image based on a distance from the respective chin region to the pixels to be adjusted.

6. The method according to claim 5, wherein generating the head data structure comprises, after adjusting the brightness in the extended neck region, blurring a brightness in the extended neck region along a chin outline curve that results from a transition between the neck region and the chin region.

7. The method according to one of claims 1 to 6, wherein the head data structure is adapted for image based rendering based on unstructured Lumigraph, ULG, rendering or surface light field, SLF, rendering depending on the adjusted keyframes.

8. The method according to one of claims 1 to 7, wherein the computer system has access to a plurality of PBM templates and generating the textured PBM comprises selecting the PBM template from the plurality of PBM templates based on a size information, in particular height information, and/or based on gender information.

9. The method according to one of claims 1 to 8, further comprising
- receiving a set of body measurements, each of the body measurements comprising a measurement value and being associated with a measurement instruction being defined with respect to the PBM template;
- determining a set of shape morphs for the PBM template based on the measurement instructions;
- performing an optimization on the PBM template or the textured PBM by
- applying one or more of the set of shape morphs to determine an intermediate reshaped PBM; and
- performing the measurement instructions on the intermediate reshaped PBM to determine respective intermediate values;
- until an error function is minimized, the error function being based on differences between the respective measurement values and the corresponding intermediate values resulting from the associated measurement instructions.

10. The method according to one of claims 1 to 9, wherein generating the 3D representation comprises at least one of
- creating a facial base model based on face landmarks of at least a subset of the keyframes, creating a hair proxy by fitting a plane to the facial base model based on the face landmarks, and reconstructing the 3D representation by merging the facial base model with a 3D point cloud sampled from the fitted plane;
- generating the 3D representation using a depth map fusion algorithm based on the color images, depth maps, intrinsics of the camera and face tracking information, the intrinsics and the face tracking information being comprised by the 3D metadata and the depth map fusion algorithm being configured for reconstructing non-rigid scenes.

11. The method according to one of claims 1 to 10, further comprising a capturing process for capturing the set of keyframes, wherein the capturing process comprises
- the user capturing distinct keyframes for the set of keyframes;
- the computer system evaluating positions of the digital camera and/or viewing angles of the captured keyframes in order to determine a capturing coverage; and
- the computer system providing feedback to the user based on the determined capturing coverage, the feedback including instructions for moving the camera;
until a coverage criterion based on the determined capturing coverage is fulfilled.

12. A computer implemented method for generating a perspective 2D image from a 3D avatar that is generated with a method according to one of claims 1 to 11, the method comprising
- selecting a viewpoint relative to the avatar;
- rendering the textured PBM of the avatar based on the selected viewpoint using a texture mapping algorithm employing the blended base texture map;
- rendering a head area of the avatar using an image based rendering algorithm, in particular an unstructured Lumigraph, ULG, rendering algorithm or a surface light field, SLF, rendering algorithm, based on the selected viewpoint, the 3D representation and the adjusted keyframes;
- combining the rendered textured PBM and the rendered head area to generate the perspective 2D image.

13. The method according to claim 12, wherein the 3D metadata of each of the keyframes comprise gaze direction information of the user, and wherein rendering the head area comprises selecting and/or weighting the adjusted keyframes for the image based rendering algorithm based on the gaze direction information.

14. The method according to claim 12 or 13, wherein
- the textured PBM comprises semantic information about body landmarks and regions of a body;
- rendering the textured PBM and the head area includes mapping of the regions into the perspective 2D image, in particular one or more semantic maps of the perspective 2D image;
the method further comprising
- computing a set of body outline points by intersecting the 3D representation of the textured PBM with a plurality of planes; and
- creating a 2D mesh associated with the rendered perspective 2D image together with 2D semantic information that includes at least an outline based on the outline points, regions of the body and the keyframes, the body landmarks and face landmarks comprised by the 3D metadata of each of the keyframes.

15. A computer program product comprising a non-transitory computer readable storage medium and computer program instructions stored therein enabling a computer system to execute a method according to one of the preceding claims.
